# EUROPÄISCHE PATENTSCHRIFT

(11) **EP 3 411 776 B1**
(45) Veröffentlichungstag und Bekanntmachung des Hinweises auf die Patenterteilung: **11.03.2020**
(21) Anmeldenummer: 17701323.2
(22) Anmeldetag: 25.01.2017
(51) Int. Cl.: G06F 3/01

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ DE FONCTIONNEMENT D'UN SYSTÈME DE RÉALITÉ VIRTUELLE ET SYSTÈME DE RÉALITÉ VIRTUELLE

(30) Priorität: 05.02.2016 DE 102016001313
(43) Veröffentlichungstag der Anmeldung: 12.12.2018
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2017/051456
(87) Internationale Veröffentlichungsnummer: WO 2017/133933

(56) Entgegenhaltungen:
- WO-A1-2014/133919
- GABRIEL CIRIO ET AL: "The magic barrier tape", PROCEEDINGS OF THE 16TH ACM SYMPOSIUM ON VIRTUAL REALITY SOFTWARE AND TECHNOLOGY; NOVEMBER 18 - 20, 2009, KYOTO, JAPAN, ACM, 2 PENN PLAZA, SUITE 701 NEW YORK NY 10121-0701 USA, 18. November 2009 (2009-11-18), Seiten 155-162, XP058210129, DOI: 10.1145/1643928.1643965 ISBN: 978-1-60558-869-8

## Beschreibung

Die Erfindung betrifft ein Verfahren zum Betreiben eines Virtual-Reality-Systems und ein Virtual-Reality-System.

Mittels eines Virtual-Reality-Systems kann eine virtuelle Realität dargestellt werden, wobei als virtuelle Realität üblicherweise die Darstellung und gleichzeitige Wahrnehmung der Wirklichkeit in ihren physikalischen Eigenschaften in einer in Echtzeit computergenerierten, interaktiven virtuellen Umgebung bezeichnet wird.

Virtual-Reality-Systeme umfassen üblicherweise zumindest eine Virtual-Reality-Brille. Bei einer Virtual-Reality-Brille handelt es sich um eine bestimmte Form eines sogenannten Head-Mounted-Displays, bei welchem es sich um ein auf dem Kopf getragenes visuelles Ausgabegerät handelt. Es präsentiert Bilder auf einem augennahen Bildschirm oder projiziert sie direkt auf die Netzhaut. Eine Virtual-Reality-Brille hat dabei zusätzlich noch Sensoren zur Bewegungserfassung des Kopfes. Damit kann die Anzeige einer berechneten Grafik an die Bewegungen eines Träger der Virtual-Reality-Brille angepasst werden. Durch die körperliche Nähe wirken die angezeigten Bildflächen von Head-Mounted-Displays erheblich größer als die freistehender Bildschirme und decken im Extremfall sogar das gesamte Sichtfeld des Benutzers ab. Da jeweilige Displays von Virtual-Reality-Brillen durch die Kopfhaltung allen Kopfbewegungen eines Trägers folgen, bekommt er das Gefühl, sich direkt in einer von einem Computer erzeugten Bildlandschaft zu bewegen.

Derartige Virtual-Reality-Systeme können eine Erfassungseinrichtung aufweisen, mittels welcher eine Position eines Trägers einer Virtual-Reality-Brille in einem Erfassungsraum erfasst werden kann. In Abhängigkeit von der erfassten Position der Person können die mittels der Virtual-Reality-Brille angezeigten Inhalte derart angepasst werden, dass der Träger der Virtual-Reality-Brille sich innerhalb einer anzeigten virtuellen Umgebung relativ zu einem virtuellen Objekt bewegen kann. Aufgrund von technischen und/oder kostenmäßigen Randbedingungen kann es vorkommen, dass der Erfassungsraum, innerhalb welchem eine Position des Trägers der Virtual-Reality-Brille zuverlässig erfassbar ist, relativ klein ist. Der Träger der Virtual-Reality-Brille kann sich virtuell nur in einem begrenzten Bereich der virtuellen Umgebung bewegen, wenn er den Erfassungsraum nicht verlassen möchte. Dabei kann beispielsweise das Problem entstehen, dass der Träger der Virtual-Reality-Brille das angezeigte virtuelle Objekt nicht umrunden und somit auch nicht aus beliebigen virtuellen Beobachtungspositionen begutachten kann ohne den Erfassungsraum zu verlassen.

Die Veröffentlichung "The magic barrier tape" (ISBN: 978-1-60558-869-8) beschreibt ein Verfahren zum Betreiben einer Virtual-Reality-Brille. Positionsveränderungen eines Trägers der Virtual-Reality-Brille werden innerhalb eines Tracking-Bereichs erfasst. Die Grenzen des Tracking-Bereichs werden mittels eines virtuellen Absperrbands innerhalb der angezeigten virtuellen Umgebung angezeigt. Solange sich der Träger der Virtual-Reality-Brille innerhalb dieses virtuellen Absperrbands bewegt, werden seine realen Bewegungen eins zu eins innerhalb der angezeigten virtuellen Umgebung umgesetzt. Sobald sich der Träger der Virtual-Reality-Brille jedoch so innerhalb des realen Tracking-Bereichs bewegt hat, dass er innerhalb der angezeigten virtuellen Umgebung an das virtuelle Absperrband gelangt, erfolgt keine positionsabhängige Fortbewegung mehr innerhalb der angezeigten virtuellen Umgebung. Stattdessen wird auf eine so genannte "rate control" umgeschaltet. Dies bedeutet, dass in Abhängigkeit davon, wie tief der Träger der Virtual-Reality-Brille in den durch das virtuelle Absperrband gekennzeichneten äußeren Bereich eindringt, die virtuelle Fortbewegungsgeschwindigkeit angepasst wird. Drückt er beispielsweise seine Hand oder ein anderes Körperteil besonders tief in das virtuelle Absperrband hinein, so bewegt er sich virtuell immer schneller vorwärts.

Das Dokument WO-A-2014/133919 offenbart Ausführungsformen, die sich darauf beziehen, dass Bewegungsverstärkung für ein virtuelles Umfeld bereitgestellt wird. Falls ein Träger einer Virtual-Reality-Brille in einem Erfassungsraum vorwärts geht, bewegt er sich in einer virtuellen Umgebung wesentlich schneller nach vorne als wenn er sich im Erfassungsraum seitlich bewegt. Falls sich der Träger der Virtual-Reality-Brille beim Erreichen einer realen Wand umdreht und im Erfassungsraum anschließend weitergeht, bewegt er sich in der virtuellen Umgebung in der ursprünglichen Richtung weiter fort.

Es ist daher die Aufgabe der vorliegenden Erfindung ein Verfahren zum Betreiben eines Virtual-Reality-Systems und ein Virtual-Reality-System bereitzustellen, mittels welchen einem Träger einer Virtual-Reality-Brille ermöglich wird, seine virtuelle Position zu einem virtuellen Objekt innerhalb einer virtuellen Umgebung im Wesentlichen beliebig zu verändern.

Diese Aufgabe wird durch ein Verfahren zum Betreiben eines Virtual-Reality-Systems und durch ein Virtual-Reality-System mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Virtual-Reality-Systems wird eine Geschwindigkeit erfasst, mit welcher eine Person, die eine Virtual-Reality-Brille aufgesetzt hat, eine Positionsveränderung innerhalb eines Erfassungsraums vornimmt. Falls erfasst wird, dass die Positionsveränderung innerhalb eines vorgegebenen Teilbereichs des Erfassungsraums erfolgt, wird eine erste virtuelle Geschwindigkeit vorgegeben, welche um einen vorgegebenen Faktor größer als die erfasste Geschwindigkeit der Person ist. Eine virtuelle Beobachtungsposition innerhalb einer virtuellen Umgebung wird gemäß der vorgegebenen ersten virtuellen Geschwindigkeit verändert, wobei
währenddessen mittels der Virtual-Reality-Brille ein innerhalb der virtuellen Umgebung angeordnetes virtuelles Objekt aus der sich verändernden virtuellen Beobachtungsposition angezeigt wird. Der Faktor wird in Abhängigkeit von den virtuellen Abmaßen des virtuellen Objekts vorgegeben.

Mittels des erfindungsgemäßen Verfahrens wird ermöglicht, dass eine Person sich innerhalb eines relativ kleinen Erfassungsraums bewegen und dennoch innerhalb einer virtuellen Umgebung relativ große Distanzen zurücklegen kann. Auch bei einem aufgrund technischer Randbedingungen oder kostenmäßiger Randbedingungen relativ kleinem Erfassungsraum, innerhalb welchem eine zuverlässige Positionserfassung eines Trägers der Virtual-Reality-Brille erfolgen kann, ist es also mittels des erfindungsgemäßen Verfahrens möglich, dass ein Träger der Virtual-Reality-Brille virtuell dennoch relativ große Distanzen innerhalb der angezeigten virtuellen Umgebung zurücklegen kann. Denn sobald sich die Person innerhalb des vorgegebenen Teilbereichs des Erfassungsraums bewegt, wird diese Bewegung virtuell innerhalb der virtuellen Umgebung mit der virtuellen Geschwindigkeit umgesetzt, welche um einen vorgegebenen Faktor größer als die erfasste Geschwindigkeit der Person ist. Beispielsweise kann es vorgesehen sein, dass die Person sich innerhalb der virtuellen Umgebung dabei doppelt so schnell bewegt, wie sie es tatsächlich real tut. Bewegt sich der Träger der Virtual-Reality-Brille beispielsweise innerhalb einer Sekunde real nur einen Meter fort, so bewegt sich die Person innerhalb der virtuellen Umgebung innerhalb derselben Zeit, also innerhalb einer Sekunde, beispielsweise zwei Meter fort. Ein virtuelles Objekt, welches relativ große virtuelle Abmaße im Vergleich zu den realen Abmaßen des Erfassungsraums aufweist, kann dadurch dennoch auf einfache Weise vom Träger der Virtual-Reality-Brille virtuell umrundet werden, ohne dass die Person an die Grenzen des Erfassungsraums gelangt. Je nachdem, welcher Faktor zur Vergrößerung der virtuellen Geschwindigkeit vorgegeben wird, kann die Person zudem sich bezogen auf die Abmaße des Erfassungsraums sehr weit virtuell von dem angezeigten virtuellen Objekt entfernen. Der Träger der Virtual-Reality-Brille kann somit auch auf einer relativ kleinen Fläche des Erfassungsraums eine sehr große virtuelle Fläche innerhalb der virtuellen Umgebung explorieren. Neben dem Vorteil, dass der Träger der Virtual-Reality-Brille auch bei sehr kleinem Erfassungsraum relativ große virtuelle Distanzen zurücklegen kann, ergibt sich der Vorteil, dass der Erfassungsraum als solcher relativ kompakt und die zur Positionserfassung der Person notwendigen technischen Mittel relativ einfach und kostengünstig gestaltet werden können.

Die Erfindung sieht vor, dass eine zweite virtuelle Geschwindigkeit, welche der erfassten Geschwindigkeit der Person entspricht, vorgegeben wird, falls erfasst wird, dass die Positionsveränderung innerhalb des Innenbereichs des Erfassungsraums erfolgt, wobei die virtuelle Beobachtungsposition innerhalb der virtuellen Umgebung gemäß der vorgegebenen zweiten virtuellen Geschwindigkeit verändert und währenddessen mittels der Virtual-Reality-Brille das innerhalb der virtuellen Umgebung angeordnete virtuelle Objekt aus der sich verändernden virtuellen Beobachtungsposition angezeigt wird. Bewegt sich die Person, welche die Virtual-Reality-Brille aufgesetzt hat, also innerhalb des Erfassungsraums außerhalb des vorgegebenen Teilbereichs, so werden reale erfasste Positionsveränderungen der Person eins zu eins innerhalb der virtuellen Umgebung umgesetzt. Bewegt sich die Person also real beispielsweise mit 4 km/h vorwärts, so bewegt sich die Person virtuell ebenfalls mit 4 km/h vorwärts. Solange sich die Person also außerhalb des vorgegebenen Teilbereichs aber dennoch innerhalb des Erfassungsraums bewegt, kann sie sich virtuell sehr authentisch relativ zum virtuellen Objekt bewegen, da Bewegungen der Person eins zu eins innerhalb der virtuellen Umgebung umgesetzt werden. Sobald sich die Person jedoch in den vorgegebenen Teilbereich des Erfassungsraums hineinbewegt und sich innerhalb dieses vorgegebenen Teilbereichs fortbewegt, so erfolgt wiederum in der bereits beschriebenen Weise eine Art beschleunigte Bewegung innerhalb der virtuellen Umgebung, da in diesem Fall wiederum die virtuelle Geschwindigkeit vorgegeben wird, welche um den vorgegebenen Faktor größer als die erfasste reale Geschwindigkeit der Person ist. Je nachdem, wo sich die Person innerhalb des Erfassungsraums bewegt, kann sich diese also entweder beschleunigt oder ganz normal innerhalb der virtuellen Umgebung bewegen, um das angezeigte virtuelle Objekt aus unterschiedlichsten Blickwinkeln zu begutachten.

Die Erfindung sieht vor, dass der Teilbereich in Form eines Außenbereichs vorgegeben wird, welcher einen Innenbereich des Erfassungsraums umgibt. Innerhalb des Innenbereichs des Erfassungsraums kann sich die Person also in besagter Weise ganz natürlich innerhalb der virtuellen Umgebung bewegen, da die realen Bewegungen eins zu eins innerhalb der virtuellen Umgebung umgesetzt werden. Sobald die Person sich innerhalb des Außenbereichs bewegt, bewegt sich die Person dahingegen innerhalb der virtuellen Umgebung schneller als sie es tatsächlich in der Realität tut. Der Vorteil den Teilbereich in Form des Außenbereichs vorzugeben, welcher den Innenbereich des Erfassungsraums umgibt, liegt insbesondere darin, dass die Person, welche die Virtual-Reality-Brille aufgesetzt hat, davor bewahrt wird, den Erfassungsraum zu verlassen. Denn sobald sich die Person im Außenbereich bewegt, legt sie innerhalb der virtuellen Umgebung größere Distanzen zurück als sie es tatsächlich in der Realität tut.

Gemäß einer weiteren vorteilhaften Ausführungsform der Erfindung ist es vorgesehen, dass mittels der Virtual-Reality-Brille ein dem vorgegebenen Teilbereich entsprechender virtueller Teilbereich innerhalb der virtuellen Umgebung angezeigt wird. Die Person kann also bei aufgesetzter Virtual-Reality-Brille jederzeit erkennen, wie sie sich wohin bewegen muss, um eine beschleunigte Bewegung innerhalb der virtuellen Umgebung zu vollziehen. Obwohl die Person bei aufgesetzter Virtual-Reality-Brille ihre reale Umgebung nicht sehen kann, wird durch Anzeigen des virtuellen Teilbereichs, welcher dem vorgegebenen Teilbereich entspricht, der Person auf einfache Weise angezeigt, wohin sie sich begeben muss, um zum einen die beschleunigte virtuelle Bewegung und zum anderen die ganz normale virtuelle Bewegung, also eine Eins-zu-eins-Umsetzung der realen Bewegung, zu erzielen.

In weiterer vorteilhafter Ausgestaltung der Erfindung ist es vorgesehen, dass die Veränderung der virtuellen Beobachtungsposition zumindest im Wesentlichen zeitlich synchron mit der Positionsveränderung der Person erfolgt. Bewegt sich also der Träger der Virtual-Reality-Brille beispielsweise real innerhalb von einer Sekunde einen Meter nach rechts, so bewegt er sich zeitlich synchron, also innerhalb derselben Sekunde, innerhalb der virtuellen Umgebung ebenfalls nach rechts. Durch die zeitliche Synchronität der realen Bewegung und der virtuellen Bewegung kann die Immersion beim Träger der Virtual-Reality-Brille verbessert werden.

Eine weitere vorteilhafte Ausführungsform der Erfindung sieht vor, dass der Faktor umso größer vorgegeben wird, je größer die virtuellen Abmaße des virtuellen Objekts, insbesondere in horizontaler Richtung, sind. Wird beispielsweise ein Personenkraftwagen in Form des virtuellen Objekts angezeigt, so wird der Faktor kleiner gewählt, als wenn beispielsweise ein Lastkraftwagen angezeigt wird. Unabhängig von der Größe des virtuell anzuzeigenden Objekts kann also sichergestellt werden, dass die Person, welche die Virtual-Reality-Brille aufgesetzt hat, auch bei einem relativ kleinen Erfassungsraum das virtuelle Objekt auf bequeme und einfache Weise umrunden kann, ohne den Erfassungsraum zu verlassen.

Gemäß einer weiteren vorteilhaften Ausführungsform der Erfindung ist es vorgesehen, dass der Faktor umso größer vorgegeben wird, je größer die virtuellen Abmaße des virtuellen Objekts im Verhältnis zu den Abmaßen des Erfassungsraums sind. Dadurch kann auf besonders einfache Weise den technischen und geometrischen Randbedingungen des Erfassungsraums Sorge getragen werden, da die Person sich innerhalb der virtuellen Umgebung umso schneller im Verhältnis zu ihrer realen Fortbewegungsgeschwindigkeit bewegen kann, umso größer das angezeigte virtuelle Objekt im Verhältnis zur Größe des realen Erfassungsraums ist. Ist der Erfassungsraum beispielsweise besonders schmal im Verhältnis zur Breite des anzuzeigenden virtuellen Objekts, so wird der Faktor bei einer Bewegung der Person in Breitenrichtung des Erfassungsraums besonders groß gewählt. Ist dabei gleichzeitig beispielsweise die Länge des Erfassungsraums im Verhältnis zur Länge des virtuellen Objekts relativ groß, so wird der Faktor bei einer Bewegung in Längsrichtung des Erfassungsraums kleiner gewählt als bei einer Bewegung der Person in Breitenrichtung des Erfassungsraums. Unabhängig von den Abmaßen des Erfassungsraums in Längenrichtung und in Breitenrichtung kann also dadurch sichergestellt werden, dass die Person das angezeigte virtuelle Objekt auf besonders einfache Weise umrunden kann, ohne den Erfassungsraum zu verlassen.

In weiterer vorteilhafter Ausgestaltung der Erfindung ist es vorgesehen, dass eine virtuelle Bewegungsrichtung, entlang welcher die Veränderung der virtuellen Beobachtungsposition erfolgt, derart vorgegeben wird, dass diese einer Bewegungsrichtung der Positionsveränderung der Person entspricht. Bewegt sich die Person also beispielsweise nach vorne, so bewegt sie sich auch virtuell innerhalb der virtuellen Umgebung nach vorne. Dadurch wird das virtuelle Begehen der virtuellen Umgebung und somit auch die Betrachtung des angezeigten virtuellen Objekts erheblich erleichtert, da die Person sich quasi natürlich innerhalb der virtuellen Umgebung - bis auf die eventuell virtuell erhöhte Bewegungsgeschwindigkeit - bewegt. Dies trägt ebenfalls dazu bei, dass die Immersion gesteigert wird.

Zudem ist es gemäß einer weiteren vorteilhaften Ausführungsform der Erfindung vorgesehen, dass nur eine horizontale Geschwindigkeitskomponente der ersten virtuellen Geschwindigkeit um den vorgegebenen Faktor vergrößert wird, und eine vertikale Geschwindigkeitskomponente der ersten virtuellen Geschwindigkeit einer vertikalen Geschwindigkeitskomponente der Geschwindigkeit der Person entspricht. Bewegt sich die Person also beispielsweise auf und ab, so bewegt sie sich unabhängig von ihrer Positionierung innerhalb des Erfassungsraums mit derselben Geschwindigkeit innerhalb der virtuellen Umgebung auf und ab. Bewegt sich die Person dahingegen vorwärts, rückwärts oder seitwärts, so bewegt sie sich innerhalb der virtuellen Umgebung - sofern sie sich innerhalb des vorgegebenen Teilbereichs des Erfassungsraums bewegt - mit einer größeren virtuellen Geschwindigkeit vorwärts, rückwärts oder seitwärts. Die sich bei der beschleunigten virtuellen Bewegung an sich gegebenenfalls vielleicht unnatürlich anfühlende Bewegung innerhalb der virtuellen Umgebung aufgrund der erhöhten virtuellen Geschwindigkeit entsteht also nur bei einer horizontalen Bewegung der Person. Denn in Hochrichtung werden die realen Bewegungen der Person auch in der virtuellen Umgebung immer eins zu eins umgesetzt. Trotz der Vergrößerung der virtuellen Bewegungsgeschwindigkeit wird dadurch zumindest teilweise eine realitätsnahe Darstellung der virtuellen Umgebung unterstützt, da zumindest Bewegungen in vertikaler Richtung sehr realitätsnah umgesetzt werden. Sollte sich die Person beispielsweise aus dem Stand in die Hocke begeben, um ihre vertikale virtuelle Beobachtungsposition innerhalb der virtuellen Umgebung zu verändern, so geschieht dies ganz natürlich, da die reale vertikale Positionsveränderung der Person eins zu eins in eine virtuelle vertikale Bewegung der Person innerhalb der virtuellen Umgebung umgesetzt wird.

Das erfindungsgemäße Virtual-Reality-System umfasst eine Virtual-Reality-Brille und eine Erfassungseinrichtung zum Erfassen einer Geschwindigkeit, mit welcher eine Person, welche die Virtual-Reality-Brille aufgesetzt hat, eine Positionsveränderung innerhalb eines Erfassungsraums vornimmt. Des Weiteren umfasst das Virtual-Reality-System eine Steuereinrichtung, welche dazu ausgelegt ist, eine Fortbewegungsgeschwindigkeit der Person zu erfassen und eine erste virtuelle Geschwindigkeit vorzugeben, welche um einen vorgegebenen Faktor größer als die erfasste Fortbewegungsgeschwindigkeit der Person ist, falls erfasst wird, dass die Positionsveränderung innerhalb eines vorgegebenen Teilbereichs des Erfassungsraums erfolgt. Des Weiteren ist die Steuereinrichtung dazu ausgelegt, eine virtuelle Beobachtungsposition innerhalb einer virtuellen Umgebung gemäß der vorgegebenen ersten virtuellen Geschwindigkeit zu verändern sowie währenddessen die Virtual-Reality-Brille zum Anzeigen eines innerhalb der virtuellen Umgebung angeordneten virtuellen Objekts aus der sich verändernden virtuellen Beobachtungsposition anzusteuern. Die Steuereinrichtung ist dazu ausgelegt, den Teilbereich in Form eines Außenbereichs vorzugeben, welcher einen Innenbereich des Erfassungsraums umgibt. Die Steuereinrichtung ist dazu ausgelegt, den Faktor in Abhängigkeit von den virtuellen Abmaßen des virtuellen Objekts vorzugeben. Zudem ist die Steuereinrichtung dazu ausgelegt, eine zweite virtuelle Geschwindigkeit, welche der erfassten Geschwindigkeit der Person entspricht, vorzugeben, falls erfasst wird, dass die Positionsveränderung innerhalb des Innenbereichs des Erfassungsraums erfolgt, und die virtuelle Beobachtungsposition innerhalb der virtuellen Umgebung gemäß der vorgegebenen zweiten virtuellen Geschwindigkeit zu verändern sowie währenddessen die Virtual-Reality-Brille zum Anzeigen des innerhalb der virtuellen Umgebung angeordneten virtuellen Objekts aus der sich verändernden virtuellen Beobachtungsposition anzusteuern. Vorteilhafte Ausgestaltungen des erfindungsgemäßen Verfahrens sind als vorteilhafte Ausgestaltungen des Virtual-Reality-Systems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Virtual-Reality-Systems, welches eine Virtual-Reality-Brille, eine Erfassungseinrichtung zum Erfassen einer die Virtual-Reality-Brille tragenden Person sowie eine Steuereinrichtung zum Ansteuern der Virtual-Reality-Brille umfasst;
- Fig. 2: eine schematische Perspektivansicht eines Erfassungsraums, innerhalb welchem eine Person angeordnet ist, welche die Virtual-Reality-Brille aufgesetzt hat, und in
- Fig. 3: eine schematische Perspektivansicht einer mittels der Virtual-Reality-Brille angezeigten virtuellen Umgebung, innerhalb welcher ein virtuelles Kraftfahrzeug angeordnet ist, wobei eine virtuelle Beobachtungsposition, aus welcher die Person durch die Virtual-Reality-Brille auf die virtuelle Umgebung blickt, schematisch dargestellt ist.

In den Figuren werden gleiche oder funktionsgleiche Elemente mit gleichen Bezugszeichen versehen.

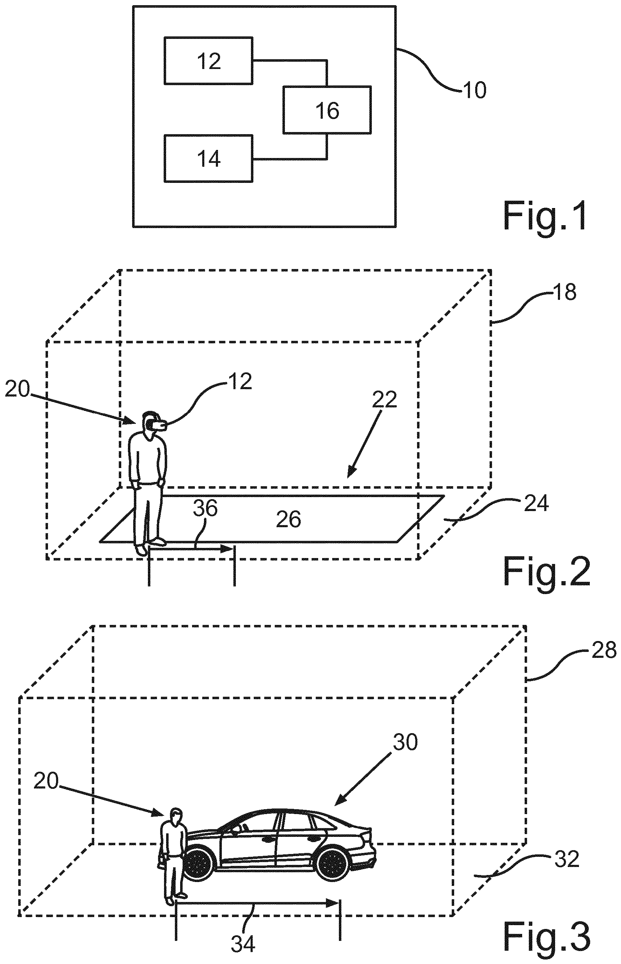

Ein Virtual-Reality-System 10 ist in einer schematischen Darstellung in Fig. 1 gezeigt. Das Virtual-Reality-System 10 umfasst eine Virtual-Reality-Brille 12, eine Erfassungseinrichtung 14 sowie eine Steuereinrichtung 16. Mittels des Virtual-Reality-Systems 10 können unterschiedlichste virtuelle Objekte, beispielsweise virtuelle Kraftfahrzeuge und dergleichen, innerhalb einer virtuellen Umgebung angezeigt werden. Die Erfassungseinrichtung 14 ist dazu ausgelegt, eine Position und eine Positionsveränderung der Virtual-Reality-Brille 12 zu erfassen. Die Erfassungseinrichtung 14 ist zudem dazu ausgelegt, eine Geschwindigkeit zu erfassen, mit welcher eine Person, welche die Virtual-Reality-Brille 12 aufgesetzt hat, eine Positionsveränderung vornimmt. Die Steuereinrichtung 16 ist dazu ausgelegt, die Virtual-Reality-Brille 12 in Abhängigkeit von der erfassten Geschwindigkeit, mit welcher sich ein Träger der Virtual-Reality-Brille 12 tatsächlich bewegt, anzusteuern.

In Fig. 2 ist ein Erfassungsraum 18, in welchem eine Person 20 angeordnet ist, die die Virtual-Reality-Brille 12 aufgesetzt hat, in einer schematischen Perspektivansicht gezeigt. Die Person 20 kann sich entlang einer Begehungsfläche 22 des Erfassungsraums 18 frei bewegen. Solange sich die Person 20 mit der aufgesetzten Virtual-Reality-Brille 12 innerhalb des Erfassungsraums 18 befindet, also die Begehungsfläche 22 nicht verlässt, kann die Erfassungseinrichtung 14 zuverlässig Positionsveränderungen der Person 20 erfassen, indem die Erfassungseinrichtung 14 Positionsveränderungen der Virtual-Reality-Brille 12 erfasst. Beispielsweise kann die Erfassungseinrichtung 14 laserbasierte oder infrarotbasierte Erfassungsmittel aufweisen, mittels welchen die Position der Virtual-Reality-Brille 12 innerhalb des Erfassungsraums 18 erfasst werden kann. In Abhängigkeit von der erfassten Position der Virtual-Reality-Brille 12 kann dementsprechend auch auf die Position der Person 20 geschlossen werden. Darüber hinaus kann über die Positionserfassung der Virtual-Reality-Brille 12 auch auf eine Bewegungsgeschwindigkeit der Virtual-Reality-Brille 12 und damit auch auf eine Bewegungsgeschwindigkeit der Person 20 geschlossen werden.

Die Begehungsfläche 22 ist in einen Teilbereich 24 in Form eines Außenbereichs und in einen Innenbereich 26 unterteilt, welcher von dem Teilbereich 24 umgeben ist.

In Fig. 3 ist eine virtuelle Umgebung 28 in einer schematischen Perspektivansicht gezeigt. Innerhalb der virtuellen Umgebung 28 ist ein virtuelles Kraftfahrzeug 30 angeordnet. Die virtuelle Umgebung 28 mitsamt dem virtuellen Kraftfahrzeug 30 wird mittels der Virtual-Reality-Brille 12 angezeigt. Die Person 20 ist nur zu Illustrationszwecken innerhalb der virtuellen Umgebung 28 dargestellt, um eine nicht näher bezeichnete virtuelle Beobachtungsposition der Peson 20 zu kennzeichnen, aus welcher diese durch die Virtual-Reality-Brille 12 die virtuelle Umgebung 28 und somit auch das virtuelle Kraftfahrzeug 30 angezeigt bekommt. Bewegt sich die Person 20 auf der realen Begehungsfläche 22 des Erfassungsraums 18 fort, so bewegt sich die Person 20 virtuell innerhalb der virtuellen Umgebung 28 auf einer virtuellen Begehungsfläche 32 fort. Die Abmaße der virtuellen Begehungsfläche 32 können dabei wesentlich größer sein als die Abmaße der realen Begehungsfläche 22. Wie bereits erwähnt, kann eine Positionsveränderung der Person 20 jedoch nur solange zuverlässig erfasst werden, wie sich die Person 20 mitsamt der Virtual-Reality-Brille 12 innerhalb des Erfassungsraums 18 aufhält. Sollte der Erfassungsraums 18 also relativ klein im Verhältnis zu den virtuellen Abmaßen des virtuellen Kraftfahrzeugs 30 sein, so könnte gegebenenfalls das Problem entstehen, dass die Person 20 das angezeigte virtuelle Kraftfahrzeug 30 gar nicht umrunden kann, ohne dabei zwangsläufig den Erfassungsraum 18 zu verlassen. Um diesem Problem entgegenzuwirken, ist es vorgesehen, dass reale Bewegungen der Person 20 unterschiedlich innerhalb der virtuellen Umgebung 28 umgesetzt werden, je nachdem ob sich die Person 20 auf dem Teilbereich 24 oder auf dem Innenbereich 26 entlang bewegt.

Es wird fortlaufend ein Geschwindigkeit erfasst, mit welcher die Person 20 eine Positionsveränderung innerhalb des Erfassungsraums 18 vornimmt. Falls erfasst wird, dass die Positionsveränderung der Person 20 innerhalb des vorgegebenen Teilbereichs 24 erfolgt, wird eine virtuelle Geschwindigkeit vorgegeben, welche um einen vorgegebenen Faktor größer als die erfasste reale Geschwindigkeit der Person 20 ist. Die virtuelle Beobachtungsposition innerhalb der virtuellen Umgebung 28 wird sodann gemäß der vorgegebenen virtuellen Geschwindigkeit verändert, wobei währenddessen mittels der Virtual-Reality-Brille 12 das innerhalb der virtuellen Umgebung 28 angeordnete virtuelle Kraftfahrzeug 30 aus der sich verändernden virtuellen Beobachtungsposition angezeigt wird. Beispielsweise kann es vorgesehen sein, dass der besagte Faktor mit dem Wert 2 vorgegeben wird. Bewegt sich die Person 20 also auf dem Teilbereich 24 mit 4 km/h fort, so wird diese Bewegung innerhalb der virtuellen Umgebung 28 mit 8 km/h umgesetzt.

Falls jedoch erfasst wird, dass die Positionsveränderung der Person 20 auf dem Innenbereich 26 erfolgt, so wird eine zweite virtuelle Geschwindigkeit vorgegeben, welche der tatsächlich erfassten realen Geschwindigkeit der Person 20 entspricht. In diesem Fall wird die virtuelle Beobachtungsposition innerhalb der virtuellen Umgebung 28 gemäß der vorgegebenen zweiten virtuellen Geschwindigkeit verändert, wobei währenddessen wiederum mittels der Virtual-Reality-Brille 12 das innerhalb der virtuellen Umgebung 28 angeordnete virtuelle Kraftfahrzeug 30 aus der sich verändernden virtuellen Beobachtungsposition angezeigt wird. Bewegt sich die Person 20 also auf dem Innenbereich 26 fort, so werden ihre Positionsveränderungen eins zu eins innerhalb der virtuellen Umgebung 28 umgesetzt. Bewegt sich die Person 20 beispielsweise also wiederum mit 4 km/h fort, so wird diese Bewegung innerhalb der virtuellen Umgebung 28 ebenfalls mit 4 km/h umgesetzt.

Dabei kann es vorgesehen sein, dass mittels der Virtual-Reality-Brille 12 ein dem vorgegebenen Teilbereich 24 entsprechender, hier nicht näher dargestellter Teilbereich innerhalb der virtuellen Umgebung 28 angezeigt wird. Die Person 20 kann also bei aufgesetzter Virtual-Reality-Brille 12 immer erkennen, wohn sie sich bewegen muss, falls sie eine beschleunigte Bewegung oder eine ganz normale Bewegung innerhalb der virtuellen Umgebung 28 wünscht. Die jeweiligen Veränderungen der virtuellen Beobachtungsposition erfolgen dabei zeitlich synchron mit der realen Veränderung der Position der Person 20. Eine virtuelle Bewegungsrichtung 34 entlang welcher die Veränderung der virtuellen Beobachtungsposition erfolgt, wird dabei derart vorgegeben, dass diese einer Bewegungsrichtung 36 der Person 20 in der Realität entspricht. Bewegt sich die Person 20 also beispielsweise in der Realität nach rechts, so bewegt sich die Person 20 innerhalb der virtuellen Umgebung 28 ebenfalls nach rechts. Für den Fall, dass sich die Person 20 auf dem Teilbereich 24 bewegt, so legt sie lediglich eine größere Distanz innerhalb der virtuellen Umgebung 28 zurück als sie es tatsächlich in der Realität tut. Solange die Person 20 sich innerhalb des Innenbereichs 26 bewegt, so werden diese Bewegungen eins zu eins in der virtuellen Umgebung 28 umgesetzt. Der Faktor, gemäß welchem die reale Bewegungsgeschwindigkeit in der virtuellen Umgebung 28 vergrößert wird, kann dabei beispielsweise in Abhängigkeit von den virtuellen Abmaßen des virtuellen Kraftfahrzeugs 30 vorgegeben werden. Besonders vorteilhaft ist es, wenn dieser Faktor umso größer vorgegeben wird, je größer die virtuellen Abmaße des virtuellen Kraftfahrzeugs 30 in horizontaler Richtung im Verhältnis zu den Abmaßen der virtuellen Begehungsfläche 32 sind. Unabhängig von der Größe der realen Begehungsfläche 20 kann dadurch sichergestellt werden, dass die Person 20 in jedem Fall das angezeigte virtuelle Kraftfahrzeug 30 - unabhängig von den Abmaßen des virtuellen Kraftfahrzeugs 30 - innerhalb der virtuellen Umgebung 28 umrunden kann, ohne dabei den Erfassungsraum 18 zu verlassen.

Durch das erläuterte Verfahren zum Betreiben des Virtual-Reality-Systems 10 und durch das Virtual-Reality-System 10 wird also eine Lösung bereitgestellt, mittels welcher bei begrenzten Platzverhältnissen eines Erfassungsraums 18 sichergestellt werden kann, dass ein Träger der Virtual-Reality-Brille 12 auch eine relativ große virtuelle Umgebung 28 bequem virtuell erkunden kann ohne aus dem Erfassungsraum 18 hinauszutreten.

## Patentansprüche

1. Verfahren zum Betreiben eines Virtual-Reality-Systems (10), wobei
- eine Geschwindigkeit erfasst wird, mit welcher eine Person (20), die eine Virtual-Reality-Brille (12) aufgesetzt hat, eine Positionsveränderung innerhalb eines Erfassungsraums (18) vornimmt;
**dadurch gekennzeichnet, dass**:
- falls sich die Person (20), die die Virtual-Reality-Brille (12) aufgesetzt hat, innerhalb eines vorgegebenen Teilbereichs (24) des Erfassungsraums (18) fortbewegt, eine Fortbewegungsgeschwindigkeit der Person (20) erfasst wird und eine erste virtuelle Geschwindigkeit vorgegeben wird, welche um einen vorgegebenen Faktor größer als die erfasste Fortbewegungsgeschwindigkeit der Person (20) ist;
- eine virtuelle Beobachtungsposition innerhalb einer virtuellen Umgebung (28) gemäß der vorgegebenen ersten virtuellen Geschwindigkeit verändert wird, wobei währenddessen mittels der Virtual-Reality-Brille (12) ein innerhalb der virtuellen Umgebung (28) angeordnetes virtuelles Objekt (30) aus der sich verändernden virtuellen Beobachtungsposition angezeigt wird, wodurch bei begrenzten Platzverhältnissen des Erfassungsraums (18) sichergestellt ist, dass ein Träger der Virtual-Reality-Brille (12) ein virtuelles Objekt, welches relativ große virtuelle Abmaße im Vergleich zu den realen Abmaßen des Erfassungsraums (18) aufweist, virtuell umrunden kann, ohne dabei den Erfassungsraum (18) zu verlassen;
- der Teilbereich (24) in Form eines Außenbereichs vorgegeben wird, welcher einen Innenbereich (26) des Erfassungsraums (18) umgibt;
- der Faktor in Abhängigkeit von den virtuellen Abmaßen des virtuellen Objekts (30) vorgegeben wird; und
- eine zweite virtuelle Geschwindigkeit, welche der erfassten Geschwindigkeit der Person (20) entspricht, vorgegeben wird, falls erfasst wird, dass die Positionsveränderung innerhalb des Innenbereichs (26) des Erfassungsraums (18) erfolgt, wobei die virtuelle Beobachtungsposition innerhalb der virtuellen Umgebung (28) gemäß der vorgegebenen zweiten virtuellen Geschwindigkeit verändert und währenddessen mittels der Virtual-Reality-Brille (12) das innerhalb der virtuellen Umgebung (28) angeordnete virtuelle Objekt (30) aus der sich verändernden virtuellen Beobachtungsposition angezeigt wird.

2. Verfahren nach Anspruch 1,
**dadurch gekennzeichnet, dass**
mittels der Virtual-Reality-Brille (12) ein dem vorgegebenen Teilbereich (24) entsprechender virtueller Teilbereich innerhalb der virtuellen Umgebung (28) angezeigt wird.

3. Verfahren nach einem der vorhergehenden Ansprüche,
**dadurch gekennzeichnet, dass**
die Veränderung der virtuellen Beobachtungsposition zumindest im Wesentlichen zeitlich synchron mit der Positionsveränderung der Person (20) erfolgt.

4. Verfahren nach einem der vorhergehenden Ansprüche,
**dadurch gekennzeichnet, dass**
der Faktor umso größer vorgegeben wird, je größer die virtuellen Abmaße des virtuellen Objekts (30), insbesondere in horizontaler Richtung, sind.

5. Verfahren nach einem der vorhergehenden Ansprüche,
**dadurch gekennzeichnet, dass**
der Faktor umso größer vorgegeben wird, je größer die virtuellen Abmaße des virtuellen Objekts (30) im Verhältnis zu den Abmaßen des Erfassungsraums (18) sind.

6. Verfahren nach einem der vorhergehenden Ansprüche,
**dadurch gekennzeichnet, dass**
eine virtuelle Bewegungsrichtung (34), entlang welcher die Veränderung der virtuellen Beobachtungsposition erfolgt, derart vorgegeben wird, dass diese einer Bewegungsrichtung (36) der Positionsveränderung der Person (20) entspricht.

7. Verfahren nach einem der vorhergehenden Ansprüche,
**dadurch gekennzeichnet, dass**
nur eine horizontale Geschwindigkeitskomponente der ersten virtuellen Geschwindigkeit um den vorgegebenen Faktor vergrößert wird und eine vertikale Geschwindigkeitskomponente der ersten virtuellen Geschwindigkeit
einer vertikalen Geschwindigkeitskomponente der Geschwindigkeit der Person (20) entspricht.

8. Virtual-Reality-System (10), mit
- einer Virtual-Reality-Brille (12);
- einer Erfassungseinrichtung (14) zum Erfassen einer Geschwindigkeit, mit welcher eine Person (20), welche die Virtual-Reality-Brille (12) aufgesetzt hat, eine Positionsveränderung innerhalb eines Erfassungsraums (18) vornimmt;
**gekennzeichnet durch**
eine Steuereinrichtung (16), welche dazu ausgelegt ist,
- eine Fortbewegungsgeschwindigkeit der Person (20) zu erfassen und eine erste virtuelle Geschwindigkeit vorzugeben, welche um einen vorgegebenen Faktor größer als die erfasste Fortbewegungsgeschwindigkeit der Person (20) ist, falls sich die Person (20), die die Virtual-Reality-Brille (12) aufgesetzt hat, innerhalb eines vorgegebenen Teilbereichs (24) des Erfassungsraums (18) fortbewegt;
- eine virtuelle Beobachtungsposition innerhalb einer virtuellen Umgebung (28) gemäß der vorgegebenen ersten virtuellen Geschwindigkeit zu verändern sowie währenddessen die Virtual-Reality-Brille (12) zum Anzeigen eines innerhalb der virtuellen Umgebung (28) angeordneten virtuellen Objekts (30) aus der sich verändernden virtuellen Beobachtungsposition anzusteuern, wodurch bei begrenzten Platzverhältnissen des Erfassungsraums (18) sichergestellt ist, dass ein Träger der Virtual-Reality-Brille (12) ein virtuelles Objekt, welches relativ große virtuelle Abmaße im Vergleich zu den realen Abmaßen des Erfassungsraums (18) aufweist, virtuell umrunden kann, ohne dabei den Erfassungsraum (18) zu verlassen;
- den Teilbereich (24) in Form eines Außenbereichs vorzugeben, welcher einen Innenbereich (26) des Erfassungsraums (18) umgibt;
- den Faktor in Abhängigkeit von den virtuellen Abmaßen des virtuellen Objekts (30) vorzugeben; und
- eine zweite virtuelle Geschwindigkeit, welche der erfassten Geschwindigkeit der Person (20) entspricht, vorzugeben, falls erfasst wird, dass die Positionsveränderung innerhalb des Innenbereichs (26) des Erfassungsraums (18) erfolgt, und die virtuelle Beobachtungsposition innerhalb der virtuellen Umgebung (28) gemäß der vorgegebenen zweiten virtuellen Geschwindigkeit zu verändern sowie währenddessen die Virtual-Reality-Brille (12) zum Anzeigen des innerhalb der virtuellen Umgebung (28) angeordneten virtuellen Objekts (30) aus der sich verändernden virtuellen Beobachtungsposition anzusteuern.

## Claims

1. Method for operating a virtual-reality system (10), wherein:
- a velocity with which a person (20) wearing virtual-reality glasses (12) performs a change of position within a capture space (18) is captured;
**characterised in that**
- if the person (20) wearing the virtual-reality glasses (12) moves within a predetermined portion (24) of the capture space (18), a movement velocity of the person (20) is captured and a first virtual velocity is predetermined, which is greater than the captured movement velocity of the person (20) by a predetermined factor;
- a virtual observation position within a virtual environment (28) is changed in accordance with the first virtual velocity, while at the same time a virtual object (30) arranged within the virtual environment (28) is displayed by means of the virtual reality glasses (12) from the changing virtual observation position, whereby it is ensured that in the case of limited space within the capture space (18) a wearer of the virtual reality glasses (12) can move virtually around a virtual object that has relatively large dimensions in comparison to the real dimensions of the capture space (18), without leaving the capture space (18);
- the portion (24) is predetermined in the form of an outer region, which surrounds an inner region (26) of the capture space (18);
- the factor is predetermined in dependence on the virtual dimensions of the virtual object (30); and
- a second virtual velocity, which corresponds to the captured velocity of the person (20), is predetermined if it is captured that the change of position occurs within the inner region (26) of the capture space (18), wherein the virtual observation position is changed within the virtual environment (28) in accordance with the second virtual velocity while at the same time the virtual object (30) arranged within the virtual environment (28) is displayed by means of the virtual reality glasses (12) from the changing virtual observation position.

2. Method according to claim 1,
**characterised in that**
a virtual portion within the virtual environment (28) corresponding to the predetermined portion (24) is displayed by means of the virtual reality glasses (12).

3. Method according to any of the preceding claims,
**characterised in that**
the change in the virtual observation position occurs at least substantially synchronously in time with the change of position of the person (20).

4. Method according to any of the preceding claims,
**characterised in that**
the predetermined value of the factor is greater, the greater the virtual dimensions of the virtual object (30), in particular in the horizontal direction.

5. Method according to any of the preceding claims,
**characterised in that**
the predetermined value of the factor is greater, the greater the virtual dimensions of the virtual object (30) relative to the dimensions of the capture space (18).

6. Method according to any of the preceding claims,
**characterised in that**
a virtual movement direction (34), along which the change of the virtual observation position occurs, is so predetermined that it corresponds to a movement direction (36) of the change of position of the person (20).

7. Method according to any of the preceding claims,
**characterised in that**
only a horizontal velocity component of the first virtual velocity is increased by the predetermined factor and a vertical velocity component of the first virtual velocity corresponds to a vertical velocity component of a velocity of the person (20).

8. Virtual-reality system (10), with
- virtual-reality glasses (12);
- a capture device (14) for capturing a velocity at which a person (20) wearing the virtual-reality glasses (12) performs a change of position within a capture space (18);
**characterised by** a control device (16) which is configured to:
- capture a movement velocity of the person (20) and to predetermine a first virtual velocity which is greater than the captured velocity of the person (20) by a predetermined factor if the person (20) wearing the virtual-reality glasses (12) moves within a predetermined portion (24) of the capture space (18);
- change a virtual observation position within a virtual environment (28) in accordance with the predetermined first virtual velocity as well as at the same time controlling the virtual-reality glasses (12) to display a virtual object (30) arranged within the virtual environment (28) from the changing virtual observation position, whereby it is ensured that in the case of limited space within the capture space (18) a wearer of the virtual reality glasses (12) can move virtually around a virtual object that has relatively large dimensions in comparison to the real dimensions of the capture space (18), without leaving the capture space (18);
- predetermine the portion (24) in the form of an outer region, which surrounds an inner region (26) of the capture space (18);
- predetermine the factor in dependence on the virtual dimensions of the virtual object (30); and
- predetermine a second virtual velocity, which corresponds to the captured velocity of the person (20), if it is determined that the change of position occurs within the inner region (26) of the capture space (18), and to change the virtual observation position within the virtual environment (28) in accordance with the predetermined second virtual velocity as well as at the same time controlling the virtual reality glasses (12) to display the virtual object (30) arranged within the virtual environment (28) from the changing virtual observation position.

## Revendications

1. Procédé de fonctionnement d'un système de réalité virtuelle (10), dans lequel
- une vitesse à laquelle une personne (20) qui a mis des lunettes de réalité virtuelle (12) réalise une modification de position au sein d'un espace de détection (18) est détectée ;
**caractérisé en ce que** :
- si la personne (20) qui a mis les lunettes de réalité virtuelle (12) se déplace au sein d'une sous-zone (24) prédéterminée de l'espace de détection (18), une vitesse de déplacement de la personne (20) est détectée et une première vitesse virtuelle est prédéterminée, laquelle est supérieure d'un facteur prédéterminé à la vitesse de déplacement détectée de la personne (20) ;
- une position d'observation virtuelle au sein d'un environnement virtuel (28) est modifiée conformément à la première vitesse virtuelle prédéterminée, dans lequel un objet virtuel (30) agencé au sein de l'environnement virtuel (28) est affiché pendant ce temps au moyen des lunettes de réalité virtuelle (12) en se plaçant dans la position d'observation virtuelle en cours de modification, ce qui garantit qu'un porteur des lunettes de réalité virtuelle (12) peut, sans quitter la zone de détection (18), faire de manière virtuelle le tour d'un objet virtuel présentant des dimensions virtuelles relativement grandes par rapport aux dimensions réelles de l'espace de détection (18) lorsque l'espace de détection (18) est limité dans l'espace;
- la sous-zone (24) est prédéterminée sous la forme d'une zone externe qui entoure une zone interne (26) de l'espace de détection (18) ;
- le facteur est prédéterminé en fonction des dimensions virtuelles de l'objet virtuel (30) ; et
- une seconde vitesse virtuelle correspondant à la vitesse détectée de la personne (20) est prédéterminée s'il est détecté que la modification de position a lieu au sein de la zone interne (26) de l'espace de détection (18), dans lequel la position d'observation virtuelle au sein de l'environnement virtuel (28) est modifiée conformément à la seconde vitesse virtuelle prédéterminée et l'objet virtuel (30) agencé au sein de l'environnement virtuel (28) est affiché pendant ce temps au moyen des lunettes de réalité virtuelle (12) en se plaçant dans la position d'observation virtuelle en cours de modification.

2. Procédé selon la revendication 1,
**caractérisé en ce que**
une sous-zone virtuelle correspondant à la sous-zone (24) prédéterminée est affichée au sein de l'environnement virtuel (28) au moyen des lunettes de réalité virtuelle (12).

3. Procédé selon l'une quelconque des revendications précédentes,
**caractérisé en ce que**
la modification de la position d'observation virtuelle a lieu de manière au moins essentiellement synchrone avec la modification de position de la personne (20).

4. Procédé selon l'une quelconque des revendications précédentes,
**caractérisé en ce que**
plus les dimensions virtuelles de l'objet virtuel (30) sont grandes, en particulier dans le sens horizontal, plus le facteur est élevé.

5. Procédé selon l'une quelconque des revendications précédentes,
**caractérisé en ce que**
plus les dimensions virtuelles de l'objet virtuel (30) sont grandes par rapport aux dimensions de l'espace de détection (18), plus le facteur est élevé.

6. Procédé selon l'une quelconque des revendications précédentes,
**caractérisé en ce que**
une direction de déplacement virtuelle (34) dans laquelle a lieu la modification de la position d'observation virtuelle est prédéterminée de manière à correspondre à une direction de déplacement (36) de la modification de position de la personne (20).

7. Procédé selon l'une quelconque des revendications précédentes,
**caractérisé en ce que**
seule une composante de vitesse horizontale de la première vitesse virtuelle est augmentée du facteur prédéterminé et une composante de vitesse verticale de la première vitesse virtuelle correspond à une composante de vitesse verticale de la vitesse de la personne (20).

8. Système de réalité virtuelle (10), avec
- des lunettes de réalité virtuelle (12) ;
- un dispositif de détection (14) destiné à détecter une vitesse à laquelle une personne (20) qui a mis des lunettes de réalité virtuelle (12) réalise une modification de position au sein d'un espace de détection (18) ;
**caractérisé par** un dispositif de commande (16) conçu pour
- détecter une vitesse de déplacement de la personne (20) et prédéterminer une première vitesse virtuelle supérieure d'un facteur prédéterminé à la vitesse de déplacement détectée de la personne (20) si la personne (20) qui a mis les lunettes de réalité virtuelle (12) se déplace au sein d'une sous-zone (24) prédéterminée de l'espace de détection (18) ;
- modifier une position d'observation virtuelle au sein d'un environnement virtuel (28) conformément à la première vitesse virtuelle prédéterminée et commander aux lunettes de réalité virtuelle (12) d'afficher pendant ce temps un objet virtuel (30) agencé au sein de l'environnement virtuel (28) en se plaçant dans la position d'observation virtuelle en cours de modification, ce qui garantit qu'un porteur des lunettes de réalité virtuelle (12) peut, sans quitter la zone de détection (18), faire de manière virtuelle le tour d'un objet virtuel présentant des dimensions virtuelles relativement grandes par rapport aux dimensions réelles de l'espace de détection (18) lorsque l'espace de détection (18) est limité dans l'espace ;
- prédéterminer la sous-zone (24) sous la forme d'une zone externe qui entoure une zone interne (26) de l'espace de détection (18) ;
- prédéterminer le facteur en fonction des dimensions virtuelles de l'objet virtuel (30) ; et
- prédéterminer une seconde vitesse virtuelle correspondant à la vitesse détectée de la personne (20) s'il est détecté que la modification de position a lieu au sein de la zone interne (26) de l'espace de détection (18), et modifier la position d'observation virtuelle au sein de l'environnement virtuel (28) conformément à la seconde vitesse virtuelle prédéterminée tout en commandant aux lunettes de réalité virtuelle (12) d'afficher pendant ce temps l'objet virtuel (30) agencé au sein de l'environnement virtuel (28) en se plaçant dans la position d'observation virtuelle en cours de modification.
